# EUROPÄISCHE PATENTSCHRIFT

(11) **EP 3 157 770 B1**
(45) Veröffentlichungstag und Bekanntmachung des Hinweises auf die Patenterteilung: **04.07.2018**
(21) Anmeldenummer: 15720964.4
(22) Anmeldetag: 04.05.2015
(51) Int. Cl.: B60G 15/06, B62D 7/18, B60R 21/00, B60B 27/00, B60G 13/00

(54) **RADTRÄGER EINES FAHRZEUGES MIT EINER KLEMMSITZ-VERBINDUNG**
WHEEL CARRIER OF A VEHICLE WITH A CLAMP CONNECTION
SUPPORT DE ROUE D'UN VEHICULE AVEC UNE CONNEXION DE PINCE

(30) Priorität: 17.06.2014 DE 102014211632
(43) Veröffentlichungstag der Anmeldung: 26.04.2017
(73) Patentinhaber: Bayerische Motoren Werke Aktiengesellschaft, 80809 München (DE)
(72) Erfinder: KÖTZINGER, Georg, 83334 Inzell (DE)
(86) Internationale Anmeldenummer: PCT/EP2015/059647
(87) Internationale Veröffentlichungsnummer: WO 2015/193019

(56) Entgegenhaltungen:
- DE-A1-102007 021 228
- DE-A1-102012 007 889
- DE-A1-102012 021 269
- DE-A1-102014 213 364
- DE-B3-102012 205 035
- DE-B3-102012 218 224
- DE-C1- 19 542 496

## Beschreibung

Vorliegende Erfindung betrifft einen Radträger eines Fahrzeuges mit einer Klemmsitz-Verbindung zu einem weiteren Bauteil. Das weitere Bauteil ist insbesondere ein Federbein zur Verbindung des Radträgers mit der Karosserie des Fahrzeuges.

Grundsätzlich ist angestrebt, ein Fahrzeug, beispielsweise einen Personenkraftwagen, auch für den Fall eines Unfalls, d. h., wenn das Fahrzeug auf ein Hindernis aufprallt (= "Crash"), möglichst sicher zu gestalten. Um das Verletzungsrisiko für die Fahrzeuginsassen im Fall eines solchen Aufpralls zu minimieren, sollen die in Fahrtrichtung betrachtet vor dem Fahrzeug Innenraum liegenden Fahrzeugteile, also der Fahrzeug-Vorderbau, durch diesen Aufprall möglichst nicht in den Fahrzeuginnenraum eindringen. Bezüglich der Vorderräder des Fahrzeugs ist beispielsweise eine Gestaltung der radführenden Lenker solchermaßen, dass das Rad bei einem so genannten Off-Set-Aufprall nach seitlich außen geschwenkt wird, bekannt, wobei hierfür gemäß der DE 195 42 496 C1 eine hintere Querlenkerstrebe energieabsorbierend längs verformbar, d.h. verkürzbar, ist.

Es ist Aufgabe vorliegender Erfindung, einen Radträger für ein Fahrzeug anzugeben, der bei kostengünstiger Herstellung und Montage, insbesondere auch bei einem Crash, einen sicheren Betrieb des Fahrzeugs ermöglicht. Insbesondere soll eine vorteilhafte Maßnahme aufgezeigt werden, mit Hilfe derer ein Vorderrad eines Fahrzeuges bei einem Front-Crash oder ein Hinterrad eines Fahrzeuges bei einem Heck-Crash aus seiner Rad-Führung quasi teilweise entlassen werden kann, sodass sich das Rad in einer gewünschten Weise bewegen kann und die Insassen nicht gefährdet.

Die Lösung der Aufgabe erfolgt durch die Merkmale des unabhängigen Anspruchs. Die abhängigen Ansprüche haben weitere vorteilhafte Ausgestaltungen der Erfindung zum Gegenstand.

Somit wird die Aufgebe gelöst durch einen Radträger eines Fahrzeuges, insbesondere eines Kraftfahrzeuges. Der Radträger weist eine Klemmsitz-Verbindung auf. Über diese Klemmsitz-Verbindung ist der Radträger mit einem weiteren Bauteil verbindbar. Dieses weitere Bauteil ist insbesondere ein Federbein oder dgl. Der Radträger umfasst eine Schraubverbindung mit einer Schraube zum Klemmen der Klemmsitz-Verbindung. Hierzu ist ein Loch vorgesehen, in dem die Schraube sitzt. Die Schraube wird entweder in ein Gewinde im Loch eingeschraubt oder es ist am Ende der Schraube eine Mutter oder dgl. vorgesehen. Durch Festziehen der Schraubverbindung kann über die Klemmsitz-Verbindung das weitere Bauteil, insbesondere das Federbein, eingeklemmt werden. Radträger mit solchen Klemmsitz-Verbindungen sind an sich bekannt. Ein Beispiel eines solchen Radträgers wird in DE 10 2012 218 224 B3 offenbart. Des Weiteren ist ein Hebel vorgesehen. Der Hebel weist einen Befestigungsabschnitt und einen Auftreffabschnitt auf. Über dem Befestigungsabschnitt ist der Hebel an der Klemmsitz-Verbindung befestigt. Dabei ist beispielsweise im Befestigungsabschnitt ein Durchgangsloch vorgesehen. Durch dieses Durchgangsloch ragt die Schraube der Schraubverbindung. Der Befestigungsabschnitt des Hebels wird damit unter dem Schraubenkopf oder der Mutter der Schraubverbindung eingeklemmt. Der Auftreffabschnitt steht vom Befestigungsabschnitt ab. Im Fall eines Crashs kommt es zur Deformation des Fahrzeugs. Der Auftreffabschnitt ist derart angeordnet, dass ein Bestandteil des sich deformierenden Fahrzeugs auf den Auftreffabschnitt trifft und somit eine Kraft auf den Auftreffabschnitt auswirkt. Durch diese Krafteinwirkung auf den Auftreffabschnitt bewirkt der Hebel eine Kraft auf die Schraube. Dadurch löst sich die Schraube zumindest teilweise, wodurch sich auch die Klemmsitz-Verbindung löst. Aufgrund der gelösten Klemmsitz-Verbindung kann sich der Radträger gegenüber dem weiteren Bauteil, insbesondere dem Federbein, bewegen. Darauf ist es möglich, dass das Rad, welches sich am Radträger befindet, während dem Crash eine gewünschte Bewegung ausführt.

In dem das Loch umgebenden Material des Radträgers ist zumindest eine Materialverjüngung oder eine Materialaussparung vorgesehen. Bei einer Krafteinwirkung auf den Hebel ermöglicht diese Materialverjüngung oder Materialaussparung ein leichtes Ausbrechen der Schraube aus dem Loch. Ohne diese erfindungsgemäße Materialverjüngung oder Materialaussparung wäre die benötigte Kraft zum zumindest teilweisen Lösen der Schraube relativ hoch und nicht wiederholsicher auslegbar. Des Weiteren müsste dann der Hebel sehr massiv ausfallen. Aufgrund der erfindungsgemäßen Verwendung der Materialverjüngung oder Materialaussparung muss der Hebel beim Crash die Schraube nicht zerstören sondern es kommt zu einem Aufbrechen des das Loch umgebenden Materials. Dadurch kann die Schraube zumindest teilweise aus dem Loch seitlich herausgehebelt werden. Infolge dessen muss der Hebel nicht allzu massiv ausgestaltet werden und die Lösung der Klemmsitz-Verbindung beim Crash kann wiederholbar und prozesssicher gestaltet werden. Des Weiteren wird durch das Heraushebeln der Schraube die Klemmung der Klemmsitz-Verbindung aktiv aufgehoben.

Vorteilhafterweise wird die Materialverjüngung oder Materialaussparung ausreichend groß gestaltet, um ein sicheres Aufbrechen des Lochs und somit ein Heraushebeln der Schraube zu gewährleisten. Hierzu ist bevorzugt vorgesehen, dass die Materialverjüngung oder Materialaussparung sich über zumindest 10 %, vorzugsweise über zumindest 20 % der Länge des Lochs erstreckt.

Die Materialaussparung wird vorteilhafterweise als vollständiger Durchbruch in dem das Loch umgebenden Material ausgebildet. Durch Ausbildung des Durchbruchs liegt die Mantelfläche der Schraube im Loch zumindest stellenweise frei. Solch eine Materialaussparung als vollständiger Durchbruch ist einfach zu fertigen und ermöglicht ein sicheres und wiederholbares Ausbrechen der Schraube.

Die Klemmsitz-Verbindung ist vorteilhafterweise als Schelle ausgebildet. Diese Schelle ist integraler Bestandteil des Radträgers. Die Schelle weist üblicherweise einen Schlitz auf. Dieser Schlitzt unterteilt das Loch, in dem die Schraube sitzt, in einen ersten Lochabschnitt und in einen zweiten Lochabschnitt. Beim Anziehen der Schraubverbindung verkürzt sich die Breite des Schlitzes, wodurch es zum Klemmen der Klemmsitz-Verbindung kommt. Die Hebelstruktur wird vorteilhafterweise an einem äußeren Ende des ersten Lochabschnitts befestigt.

Durch die entsprechende Befestigung des Hebels am ersten Lochabschnitt wird vorteilhafterweise die erfindungsgemäß vorgesehene Materialverjüngung oder Materialaussparung an dem den ersten Lochabschnitt umgebenden Material ausgebildet.

Besonders bevorzugt ist die Materialaussparung ein Längsschlitz am ersten Lochabschnitt. Dieser Längsschlitz ist als vollständiger Durchbruch ausgebildet, sodass am Längsschlitz die Mantelfläche der Schraube freiliegt.

Besonders bevorzugt erstreckt sich der Längsschlitz über zumindest 80 %, vorteilhafterweise über zumindest 90 %, der Länge des ersten Lochabschnitts. Besonders bevorzugt ist der Längsschlitz über 100 %, also den gesamten ersten Lochabschnitt, ausgebildet. Durch die Verwendung dieses Längsschlitzes ist ein entsprechend einfaches Heraushebeln der Schraube aus dem ersten Lochabschnitt möglich. Dabei ist insbesondere im Bereich des zweiten Lochabschnitts keine Materialaussparung oder Materialverjüngung vorgesehen, sodass beim Heraushebeln der Schraube die Schraube fest im zweiten Lochabschnitt verbleibt. Dadurch kommt es nicht nur zu einem Lösen der Schraube aus dem ersten Lochabschnitt sondern auch gleichzeitig zu einem Aufhebeln der gesamten Schelle.

Die Erfindung umfasst vorteilhafterweise ein Fahrzeug, insbesondere Kraftfahrzeug mit einer Karosserie und zumindest einem soeben beschriebenen Radträger. Das Bauteil, welches in der Klemmsitz-Verbindung befestigt ist, verbindet den Radträger mit der Karosserie. Dementsprechend ist das Bauteil vorteilhafterweise als Federbein oder dgl. Ausgebildet.

Weitere Einzelheiten, Merkmale und Vorteile der Erfindung ergeben sich aus der nachfolgenden Beschreibung und den Figuren. Es zeigen:
- Figur 1: einen erfindungsgemäßen Radträger gemäß einem Ausführungsbeispiel;
- Figur 2: ein erstes Detail zur Figur 1;
- Figur 3: ein zweites Detail zur Figur 1.

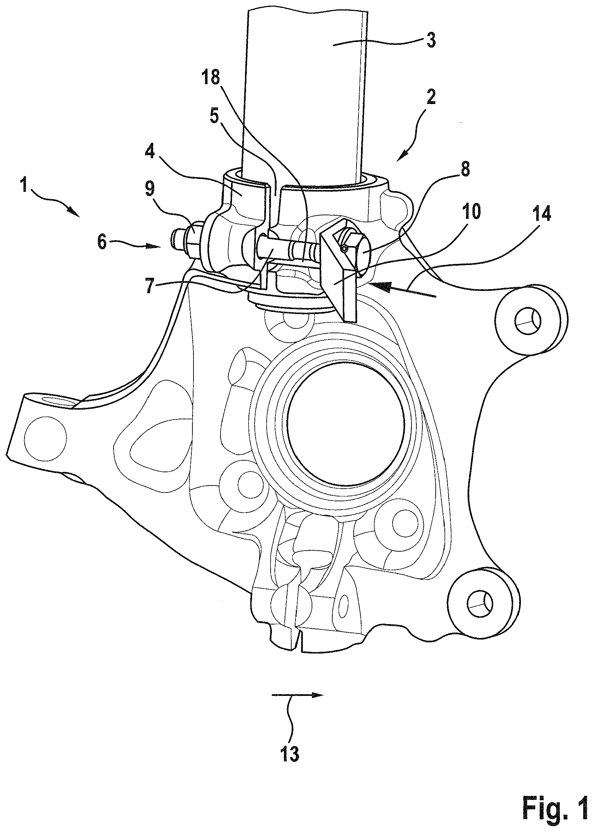

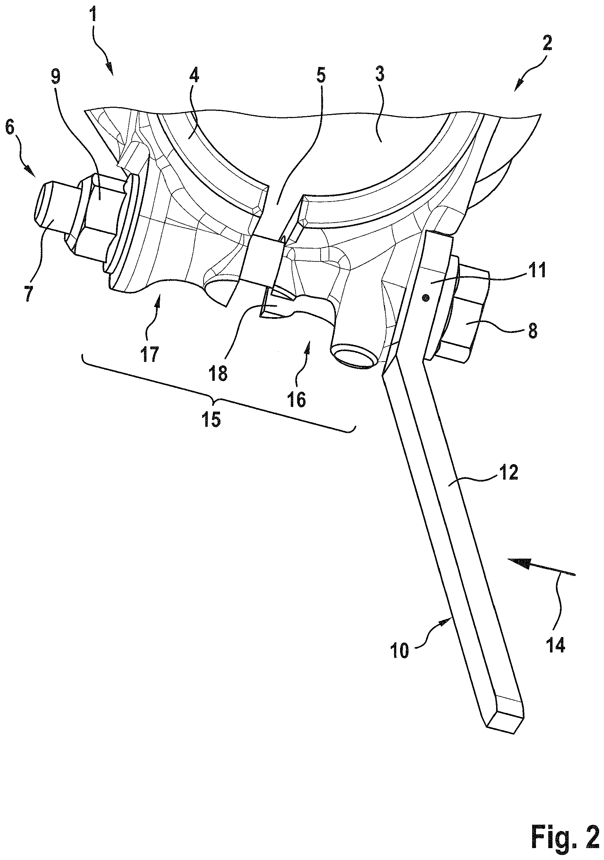

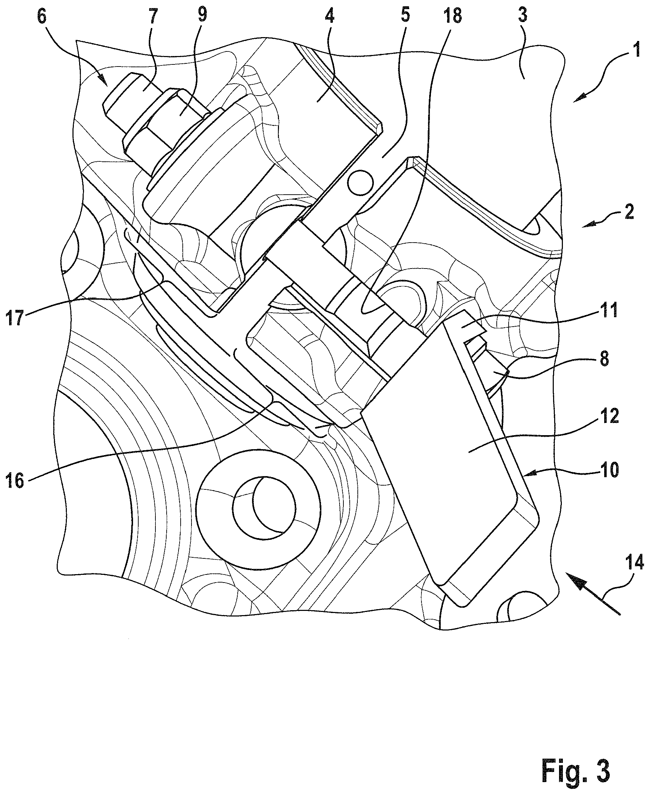

Im Folgenden wird anhand der Figuren 1 - 3 ein erfindungsgemäßer Radträger 1 gemäß einem Ausführungsbeispiel gezeigt. Die Figuren 2 und 3 zeigen jeweils Details zu Figur 1.

Der Radträger 1 dient zur drehbeweglichen Aufnahme eines Rades eines Kraftfahrzeuges. Im Ausführungsbeispiel ist ein vorderer linker Radträger 1 gezeigt. Demgemäß ist auch eine Fahrtrichtung 13 des Fahrzeugs eingezeichnet. Der Radträger 1 weist eine Klemmsitz-Verbindung 2 auf. In dieser Klemmsitz-Verbindung 2 ist ein weiteres Bauteil 3, hier ausgebildet als Federbein, eingeklemmt. Über dieses weitere Bauteil 3 wird der Radträger 1 mit einer nicht dargestellten Karosserie des Fahrzeugs verbunden.

Die Klemmsitz-Verbindung 2 ist als Schelle 4 ausgebildet. Die Schelle 4 ist integraler Bestandteil des Radträgers 1. Die Schelle 4 weist einen Schlitz 5 auf. Durch Festziehen einer Schraubverbindung 6 verringert sich die Breite des Schlitzes 5 und das weitere Bauteil 3 kann somit in der Klemmsitz-Verbindung 2 eingeklemmt werden.

Die Schraubverbindung 6 umfasst eine Schraube 7 mit einem Kopf 8 sowie eine auf die Schraube 7 aufgeschraubte Mutter 9.

Wie insbesondere die Detaildarstellung in Figur 2 zeigt, ist ein Hebel 10 vorgesehen. Der Hebel 10 ist als einstückiges Bauteil unterteilt in einen Befestigungsabschnitt 11 und einen Auftreffabschnitt 12. Der Befestigungsabschnitt 11 des Hebels 10 ist unter dem Kopf 8 der Schraube 7 eingeklemmt. Der Auftreffabschnitt 12 steht vom Befestigungsabschnitt 11 ab. Bei einem Crash des Fahrzeuges kommt es zu einer Deformation des Fahrzeugs und dadurch zu einem Auftreffen von bestimmten Teilen des Fahrzeugs auf den Auftreffabschnitt 12. Dadurch kommt es zu der schematisch eingezeichneten Krafteinwirkung 14. Durch die Krafteinwirkung 14 wirkt über den Hebel 10 eine entsprechende Kraft auf die Schraubverbindung 6 und auf die Klemmsitz-Verbindung 2.

Insbesondere die Figuren 2 und 3 zeigen die Ausbildung eines Lochs 15 in der Klemmsitz-Verbindung 2. In diesem Loch 15 steckt die Schraube 7. Der Schlitz 5 der Schelle 4 unterteilt das Loch 15 in einen ersten Lochabschnitt 16 und in einen zweiten Lochabschnitt 17. Der Befestigungsabschnitt 17 des Hebels 10 ist unter dem Kopf 8 der Schraube 7 am ersten Lochabschnitt 16 eingeklemmt.

In dem den ersten Lochabschnitt 16 umgebenden Material ist eine Materialaussparung 18 vorgesehen. Im gezeigten Ausführungsbeispiel ist diese Materialaussparung als Längsschlitz ausgebildet. Insbesondere anhand von Figur 3 ist zu sehen, dass die Materialaussparung 18 über die gesamte Länge des ersten Lochabschnitts 16 die Schraube 7 freilegt.

Durch die Krafteinwirkung 14 auf den Hebel 16 kann die Schraube 7 über die Materialaussparung 18 herausgehebelt werden. Dadurch kommt es zu einem Lösen der Klemmsitz-Verbindung 2. Aufgrund des Lösens der Klemmsitz-Verbindung 2 kann sich der Radträger 1 gegenüber dem Bauteil 3 bewegen. Dadurch ist es möglich, dass beim Crash das am Radträger 1 befestigte Rad entsprechend bewegt wird und in eine für den Crash bevorzugte Stellung gebracht werden kann.

Das Ausführungsbeispiel zeigt die Materialaussparung 18, ausgebildet als Längsschlitz. Alternativ oder zusätzlich dazu ist es möglich, dass die Materialaussparung 18 lediglich eine Materialverjüngung am ersten Lochabschnitt 16 und/oder am zweiten Lochabschnitt 17 darstellt. Die entsprechende Materialverjüngung kann bei der Krafteinwirkung 14 aufgebrochen werden, sodass es auch dann zu einem Heraushebeln der Schraube 7 kommt.

### Bezugszeichenliste:

- 1: Radträger
- 2: Klemmsitz-Verbindung
- 3: weiteres Bauteil, insbesondere Federbein oder dgl.
- 4: Schelle
- 5: Schlitz
- 6: Schraubverbindung
- 7: Schraube
- 8: Kopf
- 9: Mutter
- 10: Hebel
- 11: Befestigungsabschnitt
- 12: Auftreffabschnitt
- 13: Fahrtrichtung
- 14: Krafteinwirkung
- 15: Loch
- 16: erster Lochabschnitt
- 17: zweiter Lochabschnitt
- 18: Materialaussparung, insbesondere Längsschlitz

## Patentansprüche

1. Radträger eines Fahrzeugs mit einer Klemmsitz-Verbindung (2) zu einem weiteren Bauteil (3), vorzugsweise einem Federbein, umfassend:
- eine Schraubverbindung (6) mit einer Schraube (7) zum Klemmen der Klemmsitz-Verbindung (2);
- ein Loch (15) in dem die Schraube (7) sitzt; und
- einen Hebel (10) mit einem Befestigungsabschnitt (11) und einem Auftreffabschnitt (12), wobei der Befestigungsabschnitt (11) mittels der Schraubverbindung (6) befestigt ist und wobei der Auftreffabschnitt (12) derart vom Befestigungsabschnitt (11) absteht, sodass bei einem Fahrzeug-Crash und der damit einher gehenden Deformation ein Teil des Fahrzeugs eine Kraft auf den Auftreffabschnitt (12) auswirft, um die Schraubverbindung (6) zumindest teilweise zu lösen;
- wobei in dem das Loch (15) umgebenden Material des Radträgers (1) zumindest eine Materialverjüngung oder Materialaussparung (18) ausgebildet ist, um bei der Krafteinwirkung (14) auf den Hebel (10) ein zumindest teilweises Ausbrechen der Schraube (7) aus dem Loch (15) zu ermöglichen.

2. Radträger nach Anspruch 1, **dadurch gekennzeichnet, dass** sich die Materialverjüngung oder Materialaussparung (18) über zumindest 10 %, vorzugsweise über zumindest 20 %, der Länge des Loches (15) erstreckt.

3. Radträger nach einem der vorhergehenden Ansprüche, **dadurch gekennzeichnet, dass** die zumindest eine Materialaussparung (18) derart ausgebildet ist, sodass die Mantelfläche der Schraube (7) im Loch (15) zumindest stellenweise frei liegt.

4. Radträger nach einem der vorhergehenden Ansprüche, **dadurch gekennzeichnet, dass** die Klemmsitz-Verbindung (2) als Schelle (4) im Radträger (1) ausgebildet ist, wobei ein Schlitz (5) der Schelle (4) das Loch (15) in einen ersten Lochabschnitt (16) und in einen zweiten Lochabschnitt (17) unterteilt, und wobei der Hebel (10) am ersten Lochabschnitt (16) befestigt ist.

5. Radträger nach Anspruch 4, **dadurch gekennzeichnet, dass** die Materialverjüngung oder Materialaussparung (18) lediglich am ersten Lochabschnitt (16) ausgebildet ist.

6. Radträger nach einem der Ansprüche 4 oder 5, **dadurch gekennzeichnet, dass** die Materialaussparung (18) als Längsschlitz am ersten Lochabschnitt (16) ausgebildet ist, sodass die Mantelfläche der Schraube (7) im ersten Lochabschnitt (16) frei liegt.

7. Radträger nach Anspruch 6, **dadurch gekennzeichnet, dass** sich der Längsschlitz (18) über zumindest 80 %, vorzugsweise über zumindest 90 %, besonders vorzugsweise über 100 %, der Länge des ersten Lochabschnitts (16) erstreckt.

8. Fahrzeuge, insbesondere Kraftfahrzeuge, mit einer Karosserie und zumindest einem Radträger (1), nach einem der vorhergehenden Ansprüche, wobei das in der Klemmsitz-Verbindung (2) befestigte Bauteil (3), vorzugsweise ausgebildet als Federbein, den Radträger (1) mit der Karosserie verbindet.

## Claims

1. A wheel carrier of a vehicle having a clamping-fit connection (2) to a further component (3), preferably a suspension strut, comprising:
- a screw connection (6) with a screw (7) for clamping the clamping-fit connection (2);
- a hole (15), in which the screw (7) sits; and
- a lever (10) with a fastening portion (11) and an impact portion (12), wherein the fastening portion (11) is fastened by means of the screw connection (6), and wherein the impact portion (12) protrudes from the fastening portion (11) in such a way that, in the event of a vehicle crash and with the associated deformation of part of the vehicle, a force is exerted on the impact portion (12) in order to at least partially release the screw connection (6);
- wherein at least one material tapering or material recess (18) is formed in the material of the wheel carrier (1) surrounding the hole (15) so as to enable an at least partial breaking-out of the screw (7) from the hole (15) in the event of the force application (14) on the lever (10).

2. A wheel carrier according to claim 1, **characterised in that** the material tapering or material recess (18) extends over at least 10%, preferably over at least 20%, of the length of the hole (15).

3. A wheel carrier according to any one of the preceding claims, **characterised in that** the at least one material recess (18) is formed in such a way that the lateral surface of the screw (7) is exposed at least at places in the hole (15).

4. A wheel carrier according to any one of the preceding claims, **characterised in that** the clamping-fit connection (2) is formed as a clamp (4) in the wheel carrier (1), wherein a slot (5) of the clamp (4) divides the hole (15) into a first hole portion (16) and into a second hole portion (17), and wherein the lever (10) is fastened to the first hole portion (16).

5. A wheel carrier according to claim 4, **characterised in that** the material tapering or material recess (18) is formed merely on the first hole portion (16).

6. A wheel carrier according to either one of claims 4 or 5, **characterised in that** the material recess (18) is formed as a longitudinal slot on the first hole portion (16), such that the lateral surface of the screw (7) is exposed in the first hole portion (16).

7. A wheel carrier according to claim 6, **characterised in that** the longitudinal slot (18) extends over at least 80%, preferably over at least 90%, more especially preferably over 100%, of the length of the first hole portion (16).

8. A vehicle, more especially a motor vehicle, having a body and at least one wheel carrier (1), according to any one of the preceding claims, wherein the component (3) fastened in the clamping-fit connection (2) is preferably formed as a suspension strut connecting the wheel carrier (1) to the body.

## Revendications

1. Support de roue d'un véhicule ayant un ajustement serré (2) avec un autre composant (3), de préférence un montant de force à ressort comprenant :
- une liaison par vis (6) comportant une vis (7) pour permettre de bloquer l'ajustement serré (2),
- un perçage (15) dans lequel est logée la vis (7), et
- un levier (10) comprenant un segment de fixation (11) et un segment d'impact (12), le segment de fixation (11) étant fixé au moyen de la liaison par vis (6) et le segment d'impact (12) s'écartant du segment de fixation (11) de sorte que, en cas d'une collision du véhicule et de la déformation qui en résulte, une partie du véhicule exerce une force sur le segment d'impact (12) pour relâcher au moins partiellement la liaison par vis (6),
- support de roue dans lequel est formé, dans le matériau constitutif du support de roue (1) entourant le perçage (15), au moins un amincissement ou un évidement (18) pour permettre, en cas d'action d'une force (14) sur le levier (10) une rupture au moins partielle de la vis (7) de sorte qu'elle soit extraite du perçage (15).

2. Support de roue conforme à la revendication 1,
**caractérisé en ce que**
l'amincissement ou l'évidement de matériau (18) s'étend sur au moins 10% et de préférence sur au moins 20% de la longueur du perçage (15).

3. Support de roue conforme à l'une des revendications précédentes,
**caractérisé en ce que**
l'évidement de matériau (18) est réalisé de sorte que la surface enveloppe de la vis (7) soit positionnée librement au moins par zones dans le perçage (15).

4. Porte-roue conforme à l'une des revendications précédentes,
**caractérisé en ce que**
l'ajustement serré (2) est réalisé sous la forme d'un collier de serrage (4) dans le support de roue (1), une fente (5) du collier de serrage (4) subdivisant le perçage (15) en un premier segment de perçage (16) et en un second segment de perçage (17), le levier (10) étant fixé sur le premier segment de perçage (16).

5. Support de roue conforme à la revendication 4,
**caractérisé en ce que**
l'amincissement ou l'évidement de matériau (18) est situé uniquement sur le premier segment de perçage (16).

6. Support de roue conforme à l'une des revendications 4 et 5,
**caractérisé en ce que**
l'évidement de matériau (18) est réalisé sous la forme d'une fente longitudinale sur le premier segment de perçage (16) de sorte que la surface enveloppe de la vis (7) soit librement positionnée dans le premier segment de perçage (16).

7. Support de roue conforme à la revendication 6,
**caractérisé en ce que**
la fente longitudinale (18) s'étend sur au moins 80%, de préférence sur au moins 90% et de façon particulièrement préférentielle sur 100% de la longueur du premier segment de perçage (16).

8. Véhicule en particulier véhicule automobile équipé d'une carrosserie et d'au moins un support de roue (1) conforme à l'une des revendications précédentes, dans lequel le composant (3) fixé dans l'ajustement serré (2) de préférence réalisé sous la forme d'un montant de force à ressort relie le support de roue (1) avec la carrosserie.
